# EUROPÄISCHE PATENTSCHRIFT

(11) **EP 3 969 843 B1**
(45) Veröffentlichungstag und Bekanntmachung des Hinweises auf die Patenterteilung: **26.06.2024**
(21) Anmeldenummer: 20726389.8
(22) Anmeldetag: 14.05.2020
(51) Int. Cl.: G01B 11/275, G01B 21/26, G01B 5/255, G01B 5/00, B60B 30/02

(54) **RADHALTER**
WHEEL HOLDER
SUPPORT DE ROUE

(30) Priorität: 17.05.2019 DE 102019113122
(43) Veröffentlichungstag der Anmeldung: 23.03.2022
(73) Patentinhaber: Beissbarth Automotive Testing Solutions GmbH, 80993 München (DE)
(72) Erfinder: HOFMANN, Claudia, 80993 München (DE); PETERS, Stefanie, 80993 München (DE); ILCHEV, Trendafil, 80993 München (DE); WAGMANN, Christian, 80993 München (DE); GANSER, Nicolai, 80992 München (DE)
(74) Vertreter: Schmitt-Nilson Schraud Waibel Wohlfrom Patentanwälte Partnerschaft mbB
(86) Internationale Anmeldenummer: PCT/EP2020/063493
(87) Internationale Veröffentlichungsnummer: WO 2020/234116

(56) Entgegenhaltungen:
- DE-A1-102016 217 290
- DE-B3- 10 242 536
- US-A1- 2014 115 906
- US-A1- 2018 347 974

## Beschreibung

Die Erfindung betrifft einen Radhalter, insbesondere einen Radhalter zur Fahrzeugvermessung. Die Erfindung betrifft auch ein Verfahren zum Montieren und ein Verfahren zum Demontieren eines solchen Radhalters an einem Rad eines Fahrzeugs, insbesondere eines Kraftfahrzeugs.

Zur Fahrzeugvermessung werden häufig Radhalter, die Sensoren und/oder Messmarken ("Targets") tragen können, an den Rädern des zu vermessenden Fahrzeugs montiert.

DE 10 242 536 B3 offenbart eine Vorrichtung zur Befestigung einer Achsmeßeinrichtung an einer Felge eines Rades eines Kraftfahrzeuges, mit einem Grundkörper, mit einer Mehrzahl von Stützarmen an dem Grundkörper, wobei sich die Stützarme in radialer Richtung erstrecken, und mit an den Stützarmen entlang eines in radialer Richtung erstreckenden Verstellweges verstellbar angeordneten Antastspitzen zur Halterung des Grundkörpers an der Felge. Die Antastspitzen sind derart miteinander gekoppelt, dass die Verstellung einer Antastspitze zu einer synchronen Verstellung zumindest einer weiteren Antastspitze führt, wobei, der Abstand zwischen der Mittellängsachse der Felge und der Antastspitze entlang des Verstellweges für jede Antastspitze gleich ist.

DE 10 2016 217 290 A1 beschreibt einen Radadapter zur Befestigung an einem Rad, insbesondere an einem Rad eines Kraftfahrzeugs, der wenigstens zwei Arme aufweist, die sich von einem zentralen Bereich des Radadapters in einer radialen Richtung erstrecken. Jeder der Arme weist wenigstens ein bewegliches Element auf, das in radialer Richtung beweglich ist, um die Länge des Armes in radialer Richtung zu variieren. Die beweglichen Elemente von wenigstens zwei Armen sind so mechanisch miteinander gekoppelt, dass eine Bewegung eines beweglichen Elements eines ersten Armes in radialer Richtung eine entsprechende Bewegung wenigstens eines beweglichen Elements eine zweiten Armes zur Folge hat.

Weitere Radadapter sind in den Dokumenten US 2014/115906 A1 und US 2018/347974 A1 offenbart.

Die Handhabung solcher Radhalter, insbesondere ihre Montage und Demontage an bzw. von den Rädern des Fahrzeugs, ist in der Regel aufwändig und schwierig. Insbesondere sind dabei mehrere Arbeitsschritte erforderlich, die mit zwei Händen durchgeführt werden müssen. Es besteht die Gefahr, dass die Messergebnisse der Fahrzeugvermessung durch eine fehlerhafte und/oder ungenaue Montage der Radhalter verfälscht werden.

Es ist eine Aufgabe der Erfindung, die Montage und Demontage eines Radhalters an den Rädern eines Fahrzeugs zu vereinfachen und die Gefahr einer fehlerhaften und/oder ungenauen Montage zu reduzieren.

Diese Aufgabe wird durch den Radhalter des unabhängigen Patentanspruchs 1 und durch Verfahren des Anbringens und Entfernens eines Radhalters nach den Patentansprüchen 14 und 15 gelöst. Vorteilhafte Weiterbildungen ergeben sich aus den abhängigen Patentansprüchen.

Die Erfindung betrifft einen Radhalter, der zur Befestigung an einem Rad, insbesondere an einem Rad eines Kraftfahrzeugs, vorgesehen ist und wenigstens zwei Arme hat, die sich von einem Zentrum des Radhalters in radialer Richtung nach außen erstrecken. Jeder Arm weist ein stationäres Element und wenigstens ein bewegliches Element, z.B. einen Schlitten, auf. Das bewegliche Element ist in radialer Richtung gegenüber dem stationären Element bewegbar, so dass die Länge jedes Armes durch Bewegen des beweglichen Elements in radialer Richtung variierbar ist.

Der Radhalter hat darüber hinaus ein Synchronisationssystem, das zum Synchronisieren der Bewegungen der beweglichen Elemente ausgebildet ist, und ein Antriebssystem, das zum Antreiben der beweglichen Elemente ausgebildet ist.

Das Synchronisationssystem umfasst ein zentrales Rotationselement, das rotierbar im Zentrum des Radhalters angeordnet ist, und wenigstens zwei Kopplungselemente, die sich jeweils derart zwischen einem der beweglichen Elemente und dem zentralen Rotationselement erstrecken, dass die beweglichen Elemente durch Rotieren des Rotationselements in radialer Richtung bewegbar sind und das Rotationselement umgekehrt durch Bewegen wenigstens eines der beweglichen Elemente rotierbar ist.

Das Antriebssystem umfasst wenigstens eine Antriebsvorrichtung und wenigstens ein Kraftübertragungselement. Die wenigstens eine Antriebsvorrichtung weist ein Rad, eine Rolle oder eine Trommel auf, und das wenigstens eine Kraftübertragungselement ist auf dem Rad, der Rolle oder der Trommel aufwickelbar, um eine Zugkraft auf das bewegliche Element auszuüben.

Die wenigstens eine Antriebsvorrichtung ist über das wenigstens eine Kraftübertragungselement mit einem der beweglichen Elemente verbunden und dazu ausgebildet, eine Kraft, insbesondere eine elastische Kraft, zu erzeugen. Das wenigstens eine Kraftübertragungselement ist dazu ausgebildet, die von der wenigstens einen Antriebsvorrichtung erzeugte Kraft so auf eines der beweglichen Elemente zu übertragen, dass die auf das bewegliche Element einwirkende Kraft auf das Zentrum des Radhalters gerichtet ist.

Durch die von dem Antriebssystem erzeugten Kräfte werden die beweglichen Elemente somit in Richtung des Zentrums des Radhalters gezogen. Wenn der Radhalter an einem Rad angebracht ist, werden die beweglichen Elemente von dem Antriebssystem von außen gegen eine Lauffläche des Rades gedrückt, so dass der Radhalter sicher am Rad fixiert ist.

Die Länge der Arme eines erfindungsgemäß ausgebildeten Radhalters kann durch Bewegen der beweglichen Elemente in radialer Richtung einfach variiert werden, um den Radhalter an einem Rad zu fixieren bzw. von dem Rad zu lösen. Das Synchronisationssystem synchronisiert die Bewegungen der beweglichen Elemente, so dass sich alle beweglichen Elemente stets synchron, d.h. alle nach innen oder alle nach außen, und über die gleiche Wegstrecke, bewegen.

Die Handhabung des Radhalters wird so erheblich vereinfacht. Ein erfindungsgemäßer Radhalter kann mit hoher Genauigkeit am Rad ausgerichtet, insbesondere auf einer Radachse zentriert, werden. Ein erfindungsgemäßer Radhalter ist für Rechts- und Linkshänder gleichermaßen gut geeignet.

Die wenigstens eine Antriebsvorrichtung bildet zusammen mit dem wenigstens einen Kraftübertragungselement ein von dem Synchronisationssystem unabhängiges Antriebssystem. Die wenigstens eine Antriebsvorrichtung und das wenigstens eine Kraftübertragungselement sind insbesondere als eigenständige Elemente separat von dem Rotationselement und den Kopplungselementen ausgebildet.

Ein erfindungsgemäß ausgebildeter Radhalter ermöglicht einen besonders platzsparenden und kompakten Aufbau. Insbesondere kann die Abmessung (Dicke) des Radhalters in einer Richtung orthogonal zu der von den Armen des Radhalters aufgespannten Ebene gering gehalten werden. Darüber hinaus ermöglicht es eine erfindungsgemäße Konfiguration eines Radhalter, die beweglichen Elemente des Radhalters effizient zu synchronisieren und mit großer Kraft gegen die Lauffläche des Rades zu drücken, um den Radhalter sicher am Rad zu fixieren.

Die Erfindung umfasst auch ein Verfahren des Montierens eines erfindungsgemä-ßen Radhalters an einem Rad, insbesondere an einem Rad eines Kraftfahrzeugs. Dabei umfasst das Verfahren, die beweglichen Elemente des Radhalters synchron in radialer Richtung nach außen zu bewegen, um die Armlängen der Arme zu vergrößern; den Radhalter auf ein Rad, insbesondere ein Rad eines Kraftfahrzeugs, aufzubringen; und die beweglichen Elemente mit Hilfe der von der wenigstens einen Antriebsvorrichtung ausgeübten Kraft synchron in Richtung des Zentrums des Radhalters zu bewegen, um die Armlängen der Arme zu verringern und den Radhalter an dem Rad zu fixieren.

Die Erfindung umfasst auch ein Verfahren zum Entfernen eines erfindungsgemä-ßen Radhalters von einem Rad, insbesondere von einem Rad eines Kraftfahrzeugs. Dabei umfasst das Verfahren, die beweglichen Elemente gegen die von der wenigstens einen Antriebsvorrichtung ausgeübten Kraft synchron in radialer Richtung nach außen zu bewegen und dadurch die Länge der Arme so zu vergrößern, so dass der Radhalter einfach von dem Rad abgenommen werden kann.

In einer Ausführungsform erstreckt sich das wenigstens eine Kraftübertragungselement im Wesentlichen parallel zu einem der Arme, insbesondere entlang eines der Arme. Auf diese Weise kann die von der Antriebsvorrichtung erzeugte Kraft besonders effizient auf die beweglichen Elemente des Radhalters übertragen werden.

In einer Ausführungsform umfasst das wenigstens eine Kraftübertragungselement eine Kette, einen Draht, einen Seilzug, insbesondere einen Stahlseilzug oder einen Riemen. Ein solches Kraftübertragungselement ist flexibel, so dass es einfach zwischen der Antriebsvorrichtung und dem jeweiligen beweglichen Element verlegt werden kann. Ein flexibles Kraftübertragungselement kann beispielsweise um Rollen geführt werden. Ein flexibles Kraftübertragungselement kann auch auf einem rotierenden Element, beispielsweise einem Rad, einer Rolle oder einer Trommel, der Antriebsvorrichtung aufgewickelt werden, um eine Zugkraft auf das bewegliche Element auszuüben.

In einer Ausführungsform ist das Rad, die Rolle oder die Trommel um eine Achse rotierbar ist, die orthogonal zu einer gemeinsamen Ebene der Arme ausgerichtet ist. Auf diese Weise kann die Zugkraft effizient von der Antriebsvorrichtung auf eines der beweglichen Elemente übertragen werden.

In einer Ausführungsform weist die wenigstens eine Antriebsvorrichtung ein elastisches Element auf, das ausgebildet ist, das Kraftübertragungselement anzutreiben. Das elastische Element kann insbesondere eine Spiralfeder sein. Eine Spiralfeder ermöglicht es, eine kostengünstige und zuverlässige Antriebsvorrichtung zur Verfügung zu stellen.

In einer Ausführungsform ist die wenigstens eine Antriebsvorrichtung außerhalb des Zentrums des Radhalters, insbesondere in einem Abstand von einer zentralen Achse, um die das Rotationselement rotiert ("Rotationselementachse"), angeordnet. In einer Ausführungsform ist die wenigstens eine Antriebsvorrichtung insbesondere in einem Bereich/Winkel zwischen zwei benachbarten Armen des Radhalters angeordnet. Die wenigstens eine Antriebsvorrichtung kann insbesondere in der Nähe der Grundplatte und/oder an die Grundplatte angrenzend zwischen zwei benachbarten Armen des Radhalters angeordnet sein.

Eine solche Konfiguration ermöglicht einen besonders platzsparenden und kompakten Aufbau des Radhalters. Insbesondere kann die Abmessung (Dicke) des Radhalters in einer Richtung orthogonal zu der von den Armen des Radhalters aufgespannten Ebene gering gehalten werden. Darüber hinaus ermöglicht es eine solche Konfiguration, die von der wenigstens einen Antriebsvorrichtung erzeugte Kraft effizient auf eines der beweglichen Elemente zu übertragen.

In einer Ausführungsform ist die wenigstens eine Antriebsvorrichtung im Zentrum des Radhalters, insbesondere auf der Rotationselementachse, angeordnet.

In einer Ausführungsform weist der Radhalter wenigstens zwei Antriebsvorrichtungen und wenigstens zwei Kraftübertragungselemente auf. Durch zwei oder mehr Antriebsvorrichtungen kann die insgesamt auf die beweglichen Elemente einwirkende elastische Kraft ("Gesamtkraft") erhöht werden. Durch Aufbringen einer großen Gesamtkraft kann der Radhalter besonders sicher und fest an dem Rad fixiert werden.

In einer Ausführungsform sind die Antriebsvorrichtungen zwischen verschiedenen Armen des Radhalters angeordnet und wirken auf verschiedene bewegliche Elemente des Radhalters ein. Durch Verteilen der von den Antriebsvorrichtungen ausgeübten Kräfte auf mehrere bewegliche Elemente, können die auf die Kopplungselemente und das Rotationselement einwirkenden Kräfte reduziert werden. Die Kopplungselemente und das Rotationselement können dann weniger massiv, d.h. leichter und aus weniger Material, und damit kostengünstiger ausgebildet werden.

In einer Ausführungsform ist das Rotationselement um eine Rotationselementachse rotierbar, die orthogonal zu einer gemeinsamen Ebene der Arme ausgerichtet ist, und/oder die Kopplungselemente erstrecken sich im Wesentlichen parallel zu einer Ebene, die von den Armen aufgespannt wird. Auf diese Weise können die Bewegungen der beweglichen Elemente besonders effizient miteinander synchronisiert werden.

In einer Ausführungsform ist das Rotationselement als sternförmiges Rotationselement mit einem zentralen Bereich und wenigstens zwei Rotationselementarmen ausgebildet und jedes der Kopplungselemente ist mit einem der Rotationselementarme verbunden. Durch ein mit Rotationselementarmen ausgebildetes sternförmiges Rotationselement kann mit geringem Materialeinsatz eine mechanische Übersetzung realisiert werden, um die Wegstrecken, über die sich die Kopplungselemente bewegen, wenn das Rotationselement um einen vorgegebenen Winkel rotiert, zu vergrößern.

In einer Ausführungsform sind die Kopplungselemente jeweils schwenkbar mit dem Rotationselement und den beweglichen Elementen verbunden, um eine effiziente Kraftübertragung von dem Rotationselement auf die beweglichen Elemente zu ermöglichen.

In einer Ausführungsform hat der Radhalter drei Arme, die es ermöglichen, den Radhalter sicher an dem Rad zu befestigen. Die drei Arme können insbesondere in einer symmetrischen Konfiguration mit gleichen Winkelabständen von 120° voneinander ausgerichtet sein, aber auch andere Winkelabstände sind möglich.

In anderen möglichen Ausführungsformen hat der Radhalter mehr als drei Arme.

Ein Ausführungsbeispiel eines erfindungsgemäßen Radhalters wird im Folgenden unter Bezugnahme auf die beigefügten Figuren näher beschrieben.

### Kurze Beschreibung der Figuren

Figur 1 zeigt eine schematische Darstellung eines Rades mit einem an dem Rad montierten Radhalter.
Figuren 2 und 3 zeigen jeweils eine perspektivische Ansicht eines Radhalters gemäß einem Ausführungsbeispiel der Erfindung.
Figur 4 zeigt eine Explosionsansicht des in den Figuren 2 und 3 Radhalters.
Figur 5 zeigt eine Explosionsansicht einer Antriebsvorrichtung, wie sie in dem in den Figuren 2 bis 4 gezeigten Radhalter zum Einsatz kommt.

### Figurenbeschreibung

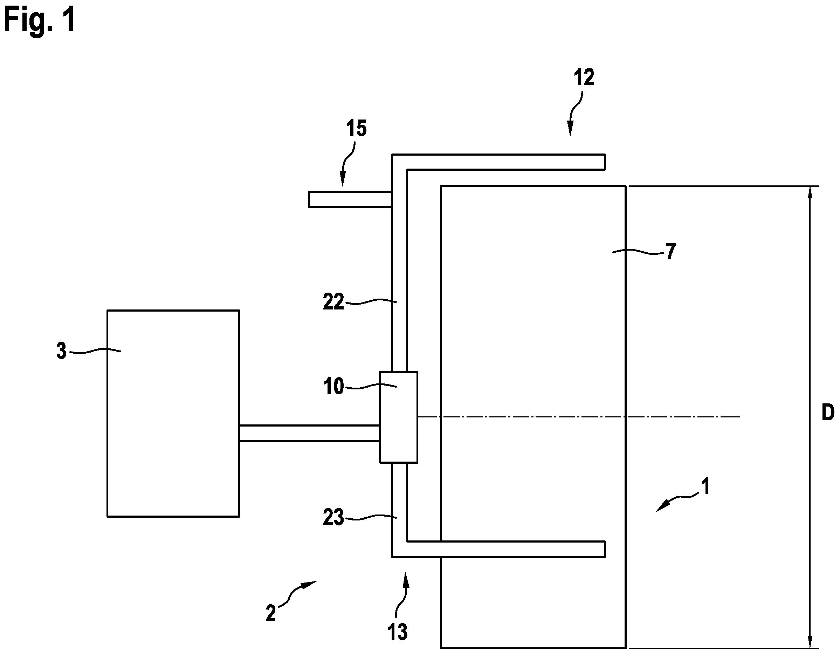

Die Figur 1 zeigt eine schematische Darstellung eines Rades 1 mit einem an dem Rad 1 montierten Radhalter 2, an dem ein Target 3 angebracht ist.

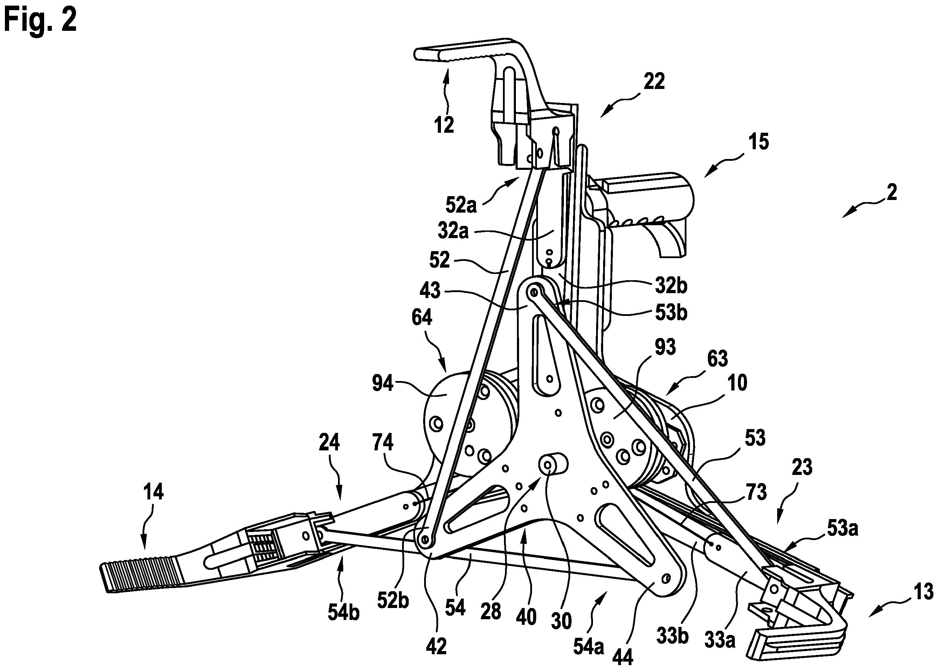

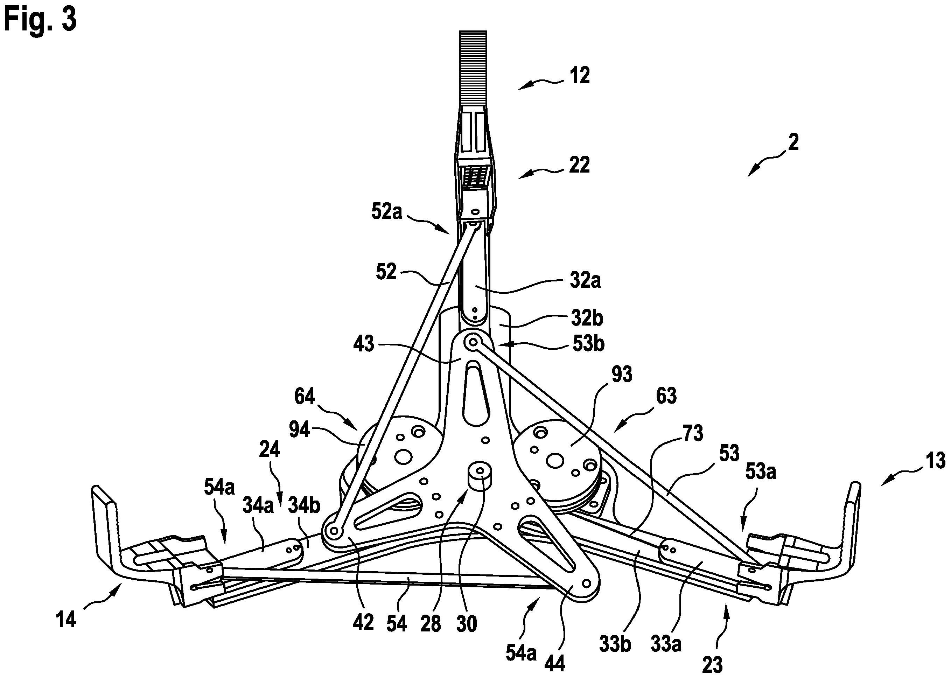

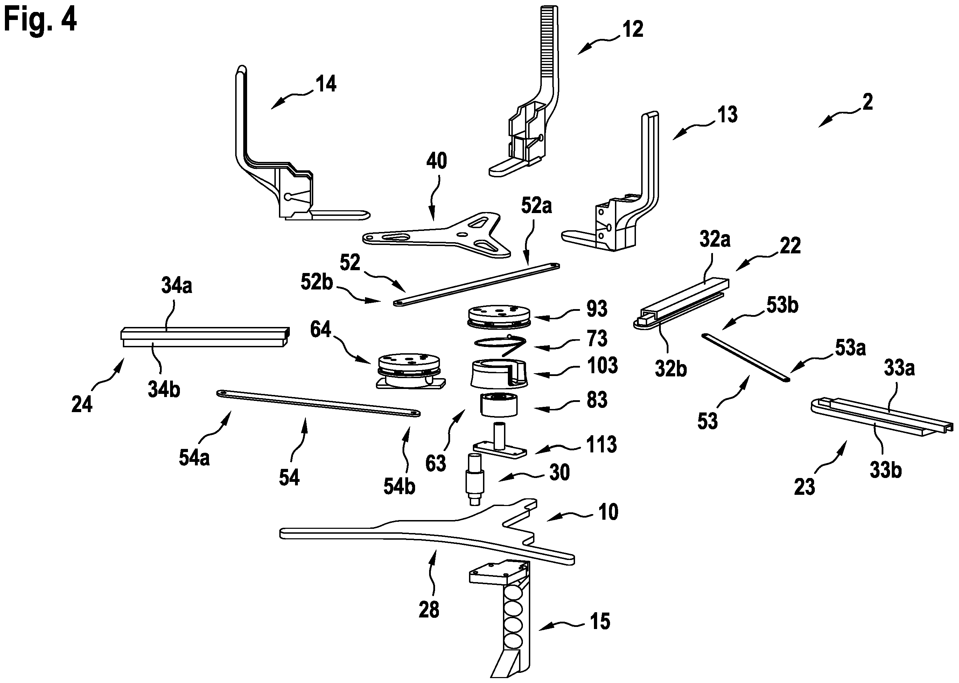

Die Figuren 2 und 3 zeigen jeweils eine perspektivische Ansicht eines Radhalters 2 gemäß einem Ausführungsbeispiel der Erfindung. Die Figur 4 zeigt eine Explosionsansicht des in den Figuren 2 und 3 gezeigten Radhalters 2.

Der Radhalter 2 hat eine Grundplatte 6 und drei Arme 22, 23, 24, die sich von einem zentralen Bereich ("Zentrum") 28 des Radhalters 2 ausgehend in radialer Richtung nach außen erstrecken. Die Arme 22, 23, 24 erstrecken sich im Wesentlichen parallel zur Ebene der Grundplatte 6. Die Arme 22, 23, 24 können, müssen aber nicht, in gleichen Winkelabständen von 120° zueinander ausgerichtet sein.

An einem der Arme 22, 23, 24 ist ein Griff 15 ausgebildet, um den Transport und die Handhabung des Radhalters 2 zu vereinfachen.

Eine zentrale Achse ("Rotationselementachse") 30 erstreckt sich orthogonal zur Grundplatte 6 durch das Zentrum 28 des Radhalters 2.

Die Arme 22, 23, 24 umfassen jeweils ein stationäres inneres Element 32b, 33b, 34b und ein bewegliches äußeres Element 32a, 33a, 34a, das entlang des jeweiligen inneren Elements 32b, 33b, 34b in radialer Richtung verschiebbar ist. Die Länge der Arme 22, 23, 24 in radialer Richtung kann somit durch Bewegen, insbesondere Verschieben, der äußeren Elemente 32a, 33a, 34a entlang der inneren Elemente 32b, 33b, 34b variiert werden.

An äußeren, vom Zentrum 28 abgewandten, Enden der äußeren Elemente 32a, 33a, 34a sind Klauen 12, 13, 14 ausgebildet, die sich im Wesentlichen rechtwinklig zu den Armen 22, 23, 24 erstrecken. Die Klauen 12, 13, 14 sind dazu vorgesehen, auf der Lauffläche 7 eines in den Figuren 2 und 3 nicht gezeigten Rades 1 aufzuliegen, wenn der Radhalter 2 an dem Rad 1 angebracht ist (siehe Figur 1), um den Radhalter 2 an dem Rad 1 zu fixieren.

Durch Bewegen / Verschieben der äußeren Elemente 32a, 33a, 34a in radialer Richtung nach außen wird die Länge der Arme 22, 23, 24 verlängert, so dass der Radhalter 2 bequem in Axialrichtung des Rades 1 auf das Rad 1 aufgebracht werden kann. Durch Bewegen der äußeren Elemente 32a, 33a, 34a nach innen, d.h. in Richtung des Zentrums 28, wird die Länge der Arme 22, 23, 24 verkürzt, so dass die Klauen 12, 13, 14 auf der Lauffläche 7 des Rades 1 aufliegen und den Radhalter 2 am Rad 1 fixieren, wie es in der Figur 1 gezeigt ist.

Ein Radhalter 2 gemäß einem Ausführungsbeispiel der Erfindung umfasst darüber ein zentrales Rotationselement 40, beispielsweise eine Rotationsplatte 40. Das Rotationselement 40 ist so auf der zentralen Achse 30 im Zentrum 28 der Grundplatte 6 angebracht, dass es um die zentrale Achse 30 rotierbar ist. Das Rotationselement 40 erstreckt sich im Wesentlichen parallel zu der von der Grundplatte 6 und den Armen 22, 24, 24 aufgespannten Ebene.

Jedes der beweglichen Elemente 32a, 33a, 34a ist durch jeweils ein Kopplungselement 52, 53, 54 mit dem Rotationselement 40 verbunden.

Ein dem Zentrum 28 zugewandtes inneres Ende 52b, 53b, 54b jedes Kopplungselements 52, 53, 54 ist beweglich, insbesondere schwenkbar, mit dem Rotationselement 40 verbunden. Ein von dem Zentrum 28 abgewandtes äußeres Ende 52a, 53a, 54a jedes Kopplungselements 52, 53, 54 ist beweglich, insbesondere schwenkbar, mit einem der beweglichen Elemente 32a, 33a, 34a verbunden. Die Kopplungselemente 52, 53, 54 sind somit gegenüber dem Rotationselement 40 und den beweglichen Elementen 32a, 33a, 34a in einer Ebene, die sich im Wesentlichen parallel zur Ebene der Grundplatte 6 erstreckt, schwenkbar.

Die Kopplungselemente 52, 53, 54 transformieren jede Rotationsbewegung des Rotationselements 40 um die zentrale Achse 30 in Translationsbewegungen der beweglichen Elemente 32a, 33a, 34a in radialer Richtung, insbesondere entlang der stationären inneren Elemente 32b, 33b, 34b, und umgekehrt. Die beweglichen Elemente 32a, 33a, 34a können somit durch Drehen des Rotationselements 40 um die zentrale Achse 30 synchron, d.h. in der gleichen Richtung (nach "innen" oder "außen") und mit der gleichen Geschwindigkeit, in radialer Richtung entlang der inneren Elemente 32b, 33b, 34b bewegt werden, um die Länge der Arme 22, 23, 24 zu variieren. Ebenso rotiert das Rotationselement 40 um die zentrale Achse 30, wenn die beweglichen Elemente 32a, 33a, 34a in radialer Richtung entlang der inneren Elemente 32b, 33b, 34b bewegt werden.

Durch das Rotationselement 40 und die Kopplungselemente 52, 53, 54 sind die beweglichen Elemente 32a, 33a, 34a der Arme 22, 23, 24 so miteinander gekoppelt, dass sich alle beweglichen Elemente 32a, 33a, 34a synchron miteinander bewegen, wenn eines der beweglichen Elemente 32a, 33a, 34a bewegt wird. Das Rotationselement 40 und die Kopplungselemente 52, 53, 54 bilden somit ein Synchronisationssystem.

Der Abstand zwischen den Klauen 11, 12, 13 kann daher durch Bewegen eines der beweglichen Elemente 32a, 33a, 34a auf einfache Weise so eingestellt werden, dass der Radhalter 2 bequem, insbesondere mit einer Hand, auf das Rad 1 aufgebracht werden kann.

In dem in den Figuren 2 bis 4 gezeigten Ausführungsbeispiel sind die Kopplungselemente 52, 53, 54 als Kopplungsstangen 52, 53, 54 ausgebildet. Die Kopplungselemente / Kopplungsstangen 52, 53, 54 können z.B. aus gestanzten Blechen geformt sein.

Die Kopplungselemente 52, 53, 54 können auch eine andere Form haben, solange sie die zuvor beschriebene Funktion erfüllen, das Rotationselement 40 so mit den beweglichen Elemente 32a, 33a, 34a zu koppeln, dass eine Rotationsbewegung des Rotationselements 40 Translationsbewegungen der beweglichen Elemente 32a, 33a, 34a zur Folge hat, und umgekehrt.

In dem in den Figuren 2 bis 4 gezeigten Ausführungsbeispiel ist das Rotationselement 40 als sternförmiges Rotationselement 40 mit drei Rotationselementarmen 42, 43, 44 ("Rotationselement-Vorsprüngen") ausgebildet, die sich von einem zentralen Bereich des Rotationselements 40, der an der zentralen Achse 30 angebracht ist, in radialer Richtung nach außen erstrecken. Die Kopplungselemente 52, 53, 54 sind jeweils schwenkbar mit einem äußeren Bereich eines der Rotationselementarme 42, 43, 44 verbunden.

Durch eine sternförmige Ausgestaltung des Rotationselements 40 kann mit geringem Aufwand und Materialeinsatz eine mechanische Übersetzung realisiert werden, welche die Wegstrecke, über die sich die beweglichen Elemente 32a, 33a, 34a in radialer Richtung bewegen, wenn das Rotationselement 40 um einen vorgegebenen Winkel um die zentrale Achse 30 rotiert wird, vergrößert.

Die in den Figuren gezeigten Rotationselementarme 42, 43, 44 des Rotationselements 40 sind aber kein notwendiges Merkmal der Erfindung. Das Rotationselement 40 kann beispielsweise auch als runde, insbesondere als kreisförmige oder elliptische, Scheibe oder als eckige, z.B. als drei-, vier- oder vieleckige Scheibe, ausgebildet sein.

Ein Radhalter 2, der gemäß einem Ausführungsbeispiel der Erfindung ausgebildet ist, umfasst darüber hinaus wenigstens eine Antriebsvorrichtung 63, 64, das dazu ausgebildet ist, wenigstens eines der beweglichen Elemente 32, 33, 34 anzutreiben.

Der in der Figuren 2 bis 4 gezeigte Radhalter 2 umfasst zwei Antriebsvorrichtungen 63, 64. Ein Radhalter 2 gemäß einem Ausführungsbeispiel der Erfindung kann aber auch nur eine Antriebsvorrichtung 63, 64 oder mehr als zwei Antriebsvorrichtungen 63, 64, insbesondere eine eigene Antriebsvorrichtung 63, 64 für jeden der Arme 22, 23, 24, aufweisen.

Die Antriebsvorrichtungen 63, 64 sind jeweils zwischen zwei benachbarten Armen 22, 23, 24 des Radhalters 2 angeordnet. Die Antriebsvorrichtungen 63, 64 sind insbesondere in dem Winkel angeordnet, den zwei benachbarten Arme 22, 23, 24 an der Grundplatte 10 miteinander ausbilden.

In einem alternativen Ausführungsbeispiel, das nicht in den Figuren gezeigt ist, ist eine Antriebsvorrichtungen 63, 64 im Zentrum 28 des Radhalters 2, insbesondere auf der zentrale Achse ("Rotationselementachse") 30 angeordnet.

Jede der Antriebsvorrichtungen 63, 64 ist jeweils mit einem inneren Ende eines zugehörigen Kraftübertragungselements 73, 74 verbunden. Die äußeren Enden der Kraftübertragungselemente 73, 74 sind jeweils mit einem der beweglichen Elemente 32a, 33a verbunden.

Die Antriebsvorrichtungen 63, 64 bilden zusammen mit den Kraftübertragungselementen 73, 74 ein Antriebssystem, das die beweglichen Elemente 32a, 33a antreibt. Die Antriebsvorrichtungen 63, 64 sind insbesondere dazu ausgebildet, auf das jeweils zugehörige Kraftübertragungselement 73, 74 eine elastische Kraft auszuüben, die das jeweilige Kraftübertragungselement 73, 74 und damit auch das mit dem jeweiligen Kraftübertragungselement 73, 74 verbundene bewegliche Element 32a, 33a elastisch in Richtung des Zentrums 28 des Radhalters 2 zieht.

Auch wenn der Radhalter 2, wie in dem in den Figuren 2 bis 4 gezeigten Ausführungsbeispiel, weniger Antriebsvorrichtungen 63, 64 und Kraftübertragungselemente 73, 74 als Arme 22, 23, 33 hat, bewirkt die Kopplung der beweglichen Elemente 32a, 33a, 34a durch das Synchronisationssystem 40, 52, 53, 53, dass sich die beweglichen Elemente 32a, 33a, 34a und die Klauen 11, 12, 13 des Radhalters 2 synchron in radialer Richtung entlang der stationären Elemente 32b, 33b, 34b der Arme 22, 23, 24 bewegen, wenn wenigstens eines der beweglichen Elemente 32a, 33a, 34a und/oder eine der Klauen 11, 12, 13 bewegt wird.

Die beweglichen Elemente 32a, 33a, 34a können insbesondere gegen die von den Antriebsvorrichtungen 63, 64 erzeugten elastischen Kräfte, die in Richtung des Zentrums 28 des Radhalters 2 wirken, mit Muskelkraft nach außen bewegt / gezogen werden, um die Arme 22, 23, 24 so zu verlängern, dass der Radhalter 2 bequem auf ein Rad 1 aufgebracht oder von diesem entfernt werden kann.

Aufgrund der von den Antriebsvorrichtungen 63, 64 erzeugten, in Richtung auf das Zentrum 28 des Radhalters 2 gerichteten, elastischen Kräfte passt sich der Radhalter 2 in Rahmen des Bewegungsspielraumes, d.h. der maximalen Weglänge, der äußeren Elemente 32a, 33a, 34a in radialer Richtung automatisch an unterschiedliche Größen (Durchmesser D) des Rades 1 an. Ein erfindungsgemäßer Radhalter 2 kann daher sehr einfach an Rädern 1 unterschiedlicher Größen montiert und wieder von diesen Rädern 1 entfernt werden.

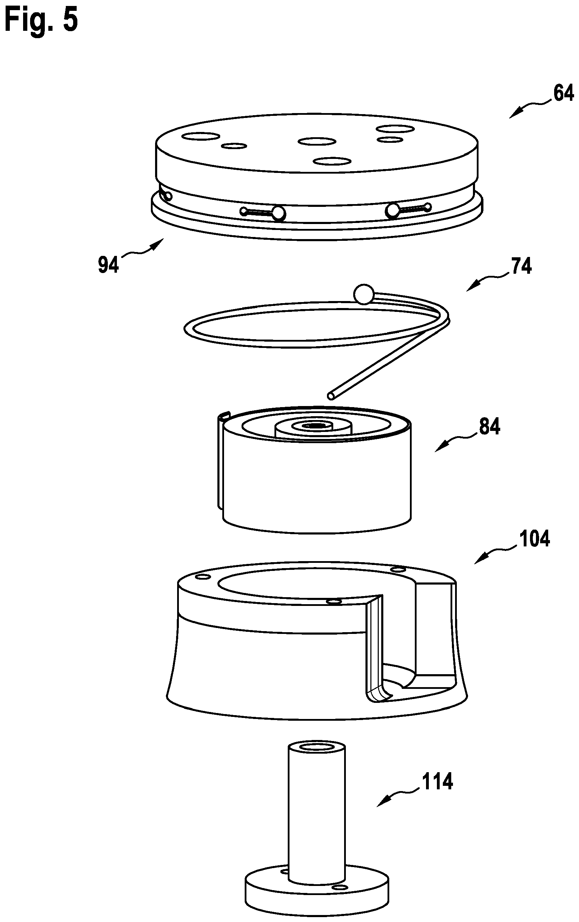

Figur 5 zeigt eine vergrößerte Explosionsansicht einer Antriebsvorrichtung 63, 64 wie sie in einem Radhalter 2, der gemäß einem Ausführungsbeispiel der Erfindung ausgebildet ist, zum Einsatz kommt.

Die in der Figur 5 Antriebsvorrichtung 64 hat ein im Wesentlichen rotationssymmetrisches Gehäuse 104, das sich um eine zentrale Achse 114 erstreckt. Auf der Achse 114 ist eine Trommel 94 angebracht. Die Trommel 94 ist um die Achse 114 rotierbar, und dazu ausgebildet, ein flexibles Kraftübertragungselement 74, z.B. ein flexibles Seil, z.B. ein Stahlseil, wie es in einem Bowdenzug verwendet wird, auf der Trommel 94 aufzuwickeln.

Die Achse 114 ist im Wesentlichen orthogonal zu der von den Armen 22, 23, 24 des Radhalters 2 aufgespannten Ebene ausgerichtet.

Das flexible Kraftübertragungselement 74 kann auch als Kette, Riemen, Draht oder Ähnliches ausgebildet sein, solange es auf eine Trommel 94 bzw. auf einem in den Figuren nicht gezeigten Rad oder ein ähnliches rotierendes Element aufwickelbar und in der Lage ist, eine ausreichend große Kraft von der Antriebsvorrichtung 64 auf das bewegliche Element 34a zu übertragen.

Zwischen der Trommel 94 und der Achse 114 ist ein elastisches Element 84, beispielsweise eine Spiralfeder, vorgesehen. Das elastische Element 84 ist derart mit der Trommel 94 und der Achse 114 verbunden, dass es die Trommel 94 so antreibt, dass die Trommel 94 bestrebt ist, um die Achse 114 zu rotieren und dabei das flexible Kraftübertragungselement 74 aufzuwickeln und dadurch zu verkürzen.

Durch das Aufwickeln des flexiblen Kraftübertragungselements 74 auf der Trommel 94 übt das Kraftübertragungselement 74 eine elastische (Zug-) Kraft auf das mit dem zweiten Ende des Kraftübertragungselements 74 verbundene (in der Figur 4 nicht gezeigte) bewegliche Element 34a aus, wobei die elastische Kraft bestrebt ist, das bewegliche Element 34a in Richtung auf das Zentrum 28 des Radhalters 2 zu ziehen.

Werden die Klauen 12, 13, 14 des Radhalters 2 auseinandergezogen, wird das Kraftübertragungselements 74 von der Trommel 94 abgewickelt.

Die durch das Abwickeln des Kraftübertragungselements 74 von der Trommel 94 bewirkte Rotation der Trommel 94 um die Achse 114 spannt das mit der Trommel 94 verbundene elastische Element 84 zusätzlich. Das bewegliche Element 34a des Radhalters 2 wird daher von dem Kraftübertragungselement 74 wieder in Richtung auf das Zentrum 28 des Radhalters 2 gezogen, sobald die zum Auseinanderziehen der beweglichen Elemente 32a, 33a, 34a bzw. Klauen 12, 13, 14 von einem Bediener aufgebrachte Kraft entfällt, z.B. weil die Klauen 12, 13, 14 losgelassen werden.

Ein Radhalter 2, der gemäß einem Ausführungsbeispiel der Erfindung ausgebildet ist, kann daher einfach an einem Rad 1 montiert und von dem Rad 1 demontiert werden.

## Patentansprüche

1. Radhalter (2) zur Befestigung an einem Rad (1), insbesondere an einem Rad (1) eines Kraftfahrzeugs, wobei der Radhalter (2) aufweist:
wenigstens zwei Arme (22, 23, 24), die sich von einem Zentrum (28) des Radhalters (2) in radialer Richtung nach außen erstrecken; wobei jeder der Arme (22, 23, 24) wenigstens ein bewegliches Element (32, 33, 34) aufweist, das in radialer Richtung beweglich ist;
ein Synchronisationssystem, das zum Synchronisieren der beweglichen Elemente (32, 33, 34) ausgebildet ist, und
ein Antriebssystem, das zum Antreiben der beweglichen Elemente (32, 33, 34) ausgebildet ist,
wobei das Synchronisationssystem (40, 52, 53, 54)
ein zentrales Rotationselement (40), das rotierbar im Zentrum (28) des Radhalters (2) angeordnet ist; und
wenigstens zwei Kopplungselemente (52, 53, 54) umfasst, die sich jeweils derart zwischen einem der beweglichen Elemente (32, 33, 34) und dem zentralen Rotationselement (40) erstrecken, dass die beweglichen Elemente (32, 33, 34) durch Rotieren des Rotationselements (40) in radialer Richtung bewegbar sind; und
wobei das Antriebssystem (63, 64, 73, 74)
wenigstens eine Antriebsvorrichtung (63, 64) und wenigstens ein Kraftübertragungselement (73, 74) umfasst,
wobei die wenigstens eine Antriebsvorrichtung (63, 64) ausgebildet ist, eine Kraft zu erzeugen und über das wenigstens eine Kraftübertragungselement (73, 74) so auf eines der beweglichen Elemente (32, 33, 34) zu übertragen, dass die auf das bewegliche Element (32, 33, 34) wirkende Kraft auf das Zentrum (28) des Radhalters (2) gerichtet ist;
**dadurch gekennzeichnet, dass**
die wenigstens eine Antriebsvorrichtung (63, 64) ein Rad, eine Rolle oder eine Trommel (93, 94) aufweist und wobei das wenigstens eine Kraftübertragungselement (73, 74) auf dem Rad, der Rolle oder der Trommel (93, 94) aufwickelbar ist.

2. Radhalter (2) nach Anspruch 1, wobei sich das wenigstens eine Kraftübertragungselement (73, 74) im Wesentlichen parallel zu einem der Arme (22, 23, 24), insbesondere entlang eines der Arme (22, 23, 24), erstreckt.

3. Radhalter (2) nach Anspruch 1 oder 2, wobei das wenigstens eine Kraftübertragungselement (73, 74) eine Kette, einen Draht, einen Seilzug oder einen Riemen umfasst.

4. Radhalter (2) nach einem der Ansprüche 1 bis 3, wobei das Rad, die Rolle oder die Trommel (93, 94) um eine Achse (113, 114) rotierbar ist, die orthogonal zu einer gemeinsamen Ebene der Arme (22, 23, 24) ausgerichtet ist.

5. Radhalter (2) nach einem der vorangehenden Ansprüche, wobei das Antriebssystem (63, 64, 73, 74) ein vom Synchronisationssystem (40, 52, 53, 54) unabhängiges Antriebssystem (63, 64, 73, 74) ist.

6. Radhalter (2) nach einem der vorangehenden Ansprüche, wobei die wenigstens eine Antriebsvorrichtung (63, 64) und das wenigstens eine Kraftübertragungselement (73, 74) als eigenständige Elemente separat von dem Rotationselement (40) und den Kopplungselementen (52, 53, 54) ausgebildet sind.

7. Radhalter (2) nach einem der vorangehenden Ansprüche, wobei die wenigstens eine Antriebsvorrichtung (63, 64) ein elastisches Element (83), insbesondere eine Spiralfeder, aufweist, das ausgebildet ist, das Kraftübertragungselement (73, 74) anzutreiben.

8. Radhalter (2) nach einem der vorangehenden Ansprüche, wobei die wenigstens eine Antriebsvorrichtung (63, 64) außerhalb des Zentrums (28) des Radhalters (2) angeordnet ist, wobei die wenigstens eine Antriebsvorrichtung (63, 64) insbesondere in einem Bereich zwischen zwei Armen (22, 23, 24) des Radhalters (2) angeordnet ist.

9. Radhalter (2) nach einem der vorangehenden Ansprüche, wobei der Radhalter (2) wenigstens zwei Antriebsvorrichtungen (63, 64) und wenigstens zwei Kraftübertragungselemente (73, 74) aufweist, wobei die Antriebsvorrichtungen (63, 64) insbesondere zwischen verschiedenen Armen (22, 23, 24) des Radhalters (2) angeordnet sind.

10. Radhalter (2) nach einem der vorangehenden Ansprüche, wobei das Rotationselement (40) um eine Achse (30) rotierbar ist, die orthogonal zu einer gemeinsamen Ebene der Arme (22, 23, 24) ausgerichtet ist, wobei sich die Kopplungselemente (52, 53, 54) insbesondere im Wesentlichen parallel zur gemeinsamen Ebene der Arme (22, 23, 24) erstrecken.

11. Radhalter (2) nach einem der vorangehenden Ansprüche, wobei das Rotationselement (40) einen zentralen Bereich und wenigstens zwei Rotationselementarme (42, 43, 44) aufweist, wobei jeder der Kopplungselemente (52, 53, 54) mit einem der Rotationselementarme (42, 43, 44) verbunden ist.

12. Radhalter (2) nach einem der vorangehenden Ansprüche, wobei die Kopplungselemente (52, 53, 54) jeweils schwenkbar mit dem Rotationselement (40) und den beweglichen Elementen (32, 33, 34) verbunden sind.

13. Radhalter (2) nach einem der vorangehenden Ansprüche, wobei der Radhalter (2) drei Arme (22, 23, 24) aufweist, wobei die drei Arme (22, 23, 24) insbesondere in Winkelabständen von 120° um das Zentrum (28) des Radhalters (2) angeordnet sind.

14. Verfahren des Anbringens eines Radhalters (2) nach einem der Ansprüche 1 bis 13 an einem Rad (1), insbesondere an einem Rad (1) eines Kraftfahrzeugs, wobei das Verfahren umfasst,
die beweglichen Elemente (32, 33, 34) synchron in radialer Richtung nach au-ßen zu bewegen, um die Armlängen der Arme zu vergrößern;
den Radhalter (2) auf ein Rad (1), insbesondere ein Rad (1) eines Kraftfahrzeugs, aufzubringen; und
die beweglichen Elemente (32, 33, 34) mit Hilfe der von der wenigstens einen Antriebsvorrichtung (63, 64) ausgeübten Kraft synchron in Richtung des Zentrums (28) des Radhalters (2) zu bewegen, um den Radhalter (2) an dem Rad (1) zu fixieren.

15. Verfahren zum Entfernen eines Radhalters (2) nach einem der Ansprüche 1 bis 13 von einem Rad (1), insbesondere von einem Rad (1) eines Kraftfahrzeugs, wobei das Verfahren umfasst, die beweglichen Elemente (32, 33, 34) gegen die von der wenigstens einen Antriebsvorrichtung (63, 64) ausgeübten Kraft synchron in radialer Richtung nach außen zu bewegen.

## Claims

1. A wheel holder (2) for fastening to a wheel (1), in particular to a wheel (1) of a motor vehicle, the wheel holder (2) comprising:
at least two arms (22, 23, 24) extending outward from a center (28) of the wheel holder (2) in a radial direction; each of the arms (22, 23, 24) having at least one movable element (32, 33, 34) that is movable in the radial direction;
a synchronization system which is designed to synchronize the movable elements (32, 33, 34), and
a drive system which is designed to drive the movable elements (32, 33, 34),
wherein the synchronization system (40, 52, 53, 54) comprises
- a central rotation element (40) that is disposed in the center (28) of the wheel holder (2) such that it can rotate; and
- at least two coupling elements (52, 53, 54) each extending between one of the movable elements (32, 33, 34) and the central rotation element (40) such that the movable elements (32, 33, 34) are movable in the radial direction by rotation of the rotation element (40); and
wherein the drive system (63, 64, 73, 74) comprises
at least one drive device (63, 64) and at least one force transmitting element (73, 74),
wherein the at least one drive device (63, 64) is designed to generate a force and to transfer the same via the at least one force transmitting element (73, 74) to one of the movable elements (32, 33, 34) such that the force acting on the movable element (32, 33, 34) is directed towards the center (28) of the wheel holder (2);
**characterized in that** the at least one drive device (63, 64) comprises a wheel, a roller or a drum (93, 94), and wherein the at least one force transmitting element (73, 74) is adapted to be wound onto the wheel, the roller or the drum (93, 94).

2. The wheel holder (2) according to claim 1,
wherein the at least one force transmitting element (73, 74) extends substantially parallel to one of the arms (22, 23, 24), in particular along one of the arms (22, 23, 24).

3. The wheel holder (2) according to claim 1 or 2,
wherein the at least one force transmitting element (73, 74) comprises a chain, a wire, a cable pull or a belt.

4. The wheel holder (2) according to any of claims 1 to 3,
wherein the wheel, the roller or the drum (93, 94) is adapted to be rotated about an axle (113, 114) that is aligned orthogonal to a common plane of the arms (22, 23, 24).

5. The wheel holder (2) according to any of the preceding claims,
wherein the drive system (63, 64, 73, 74) is a drive system (63, 64, 73, 74) that is independent of the synchronization system (40, 52, 53, 54).

6. The wheel holder (2) according to any of the preceding claims,
wherein the at least one drive device (63, 64) and the at least one force transmitting element (73, 74) are formed as independent elements separate from the rotation element (4) and the coupling elements (52, 53, 54).

7. The wheel holder (2) according to any of the preceding claims,
wherein the at least one drive device (63, 64) comprises an elastic element (83), in particular a spiral spring, which is adapted to drive the force transmitting element (73, 74).

8. The wheel holder (2) according to any of the preceding claims,
wherein the at least one drive device (63, 64) is disposed outside of the center (28) of the wheel holder (2), wherein the at least one drive device (63, 63) is disposed in particular in a region between two arms (22, 23, 24) of the wheel holder (2).

9. The wheel holder (2) according to any of the preceding claims,
wherein the wheel holder (2) comprises at least two drive devices (63, 64) and at least two force transmitting elements (73, 74), wherein the drive devices (63, 64) are arranged in particular between different arms (22, 23, 24) of the wheel holder (2).

10. The wheel holder (2) according to any of the preceding claims,
wherein the rotation element (40) is adapted to be rotated about an axle (30) that is aligned orthogonal to a common plane of the arms (22, 23, 24);
wherein the coupling elements (52, 53, 54) extend in particular substantially parallel to the common plane of the arms (22, 23, 24).

11. The wheel holder (2) according to any of the preceding claims,
wherein the rotation element (40) comprises a central portion and at least two rotation element arms (42, 43, 44), wherein each of the coupling elements (52, 53, 54) is connected to one of the rotation element arms (42, 43, 44).

12. The wheel holder (2) according to any of the preceding claims,
wherein the coupling elements (52, 53, 54) are each pivotably connected to the rotation element (40) and the movable elements (32, 33, 34).

13. The wheel holder (2) according to any of the preceding claims,
wherein the wheel holder (2) comprises three arms (22, 23, 24), wherein the three arms (22, 23, 24) are arranged in particular at angular distances of 120° about the center (28) of the wheel holder (2).

14. A method of mounting a wheel holder (2) according to any of claims 1 to 13 to a wheel (1), in particular to a wheel (1) of a motor vehicle, said method comprising the steps of:
moving the movable elements (32, 33, 34) in synchronous manner outward in a radial direction so as to increase the arm lengths of the arms;
applying the wheel holder (2) to a wheel (1), in particular a wheel (1) of a motor vehicle; and
moving the movable elements (32, 34, 34), with the aid of the force exerted by the at least one drive device (63, 64), in synchronous manner in the direction towards the center (28) of the wheel holder (2) in order to fix the wheel holder (2) to the wheel (2).

15. A method of removing a wheel holder (2) according to any of claims 1 to 13 from a wheel (1), in particular from a wheel (1) of a motor vehicle, said method comprising:
moving the movable elements (32, 33, 34) in synchronous manner outward in the radial direction against the force exerted by the at least one drive device (63, 64).

## Revendications

1. Support de roue (2) à fixer sur une roue (1), en particulier sur une roue de véhicule automobile, le support de roue (2) présentant :
au moins deux bras (22, 23, 24) qui s'étendent en direction radiale d'un centre (28) du support de roue (2) vers l'extérieur ; sachant que chacun des bras (22, 23, 24) présente au moins un élément mobile (32, 33, 34) qui est mobile en direction radiale ;
un système de synchronisation réalisé de manière à synchroniser les éléments mobiles (32, 33, 34), et
un système d'entraînement réalisé de manière à entraîner les éléments mobiles (32, 33, 34),
sachant que le système de synchronisation (40, 52, 53, 54) comprend
un élément rotatif central (40) qui est agencé de manière à tourner au centre (28) du support de roue (2) ; et
au moins deux éléments de couplage (52, 53, 54) qui s'étendent respectivement entre un des éléments mobiles (32, 33, 34) et l'élément rotatif central (40) de telle sorte que les éléments mobiles (32, 33, 34) se déplacent en direction radiale lors de la rotation de l'élément rotatif (40) ; et
dans lequel le système d'entraînement (63, 64, 73, 74) comprend
au moins un dispositif d'entraînement (63, 64) et au moins un élément de transmission de la force (73, 74),
le dispositif d'entraînement (63, 64), un au moins, étant réalisé de manière à générer une force et, par l'intermédiaire de l'élément de transmission de la force (73, 74), un au moins,
à la transmettre à l'un des éléments mobiles (32, 33, 34) de telle sorte que la force agissant sur l'élément mobile (32, 33, 34) soit orientée vers le centre (28) du support de roue (2) ;
**caractérisé en ce que**
le dispositif d'entraînement (63, 64), un au moins, présente une roue, une poulie ou un tambour (93, 94) et dans lequel l'élément de transmission de la force (73, 74), un au moins, peut être enroulé sur la roue, la poulie ou le tambour (93, 94).

2. Le support de roue (2) selon la revendication 1, dans lequel l'élément de transmission de la force (73, 74), un au moins, s'étend de manière sensiblement parallèle à l'un des bras (22, 23, 24), en particulier le long d'un des bras (22, 23, 24).

3. Le support de roue (2) selon la revendication 1 ou 2, dans lequel l'élément de transmission de la force (73, 74), un au moins, comprend une chaîne, un câble, une corde ou une courroie.

4. Le support de roue (2) selon l'une quelconque des revendications 1 à 3, dans lequel la roue, la poulie ou le tambour (93, 94) peut tourner autour d'un axe (113, 114) qui est orienté orthogonalement par rapport à un plan commun des bras (22, 23, 24).

5. Le support de roue (2) selon l'une quelconque des revendications précédentes, dans lequel le système d'entraînement (63, 64, 73, 74) est un système d'entraînement (63, 64, 73, 74) indépendant du système de synchronisation (40, 52, 53, 54).

6. Le support de roue (2) selon l'une quelconque des revendications précédentes, dans lequel le dispositif d'entraînement (63, 64), un au moins, et l'élément de transmission de la force (73, 74), un au moins, sont réalisés en tant qu'éléments indépendants, séparément de l'élément rotatif (40) et des éléments de couplage (52, 53, 54).

7. Le support de roue (2) selon l'une quelconque des revendications précédentes, dans lequel le dispositif d'entraînement (63, 64), un au moins, présente un élément élastique (83), en particulier un ressort hélicoïdal, réalisé de manière à entraîner l'élément de transmission de la force (73, 74).

8. Le support de roue (2) selon l'une quelconque des revendications précédentes, dans lequel le dispositif d'entraînement (63, 64), un au moins, est disposé en dehors du centre (28) du support de roue (2), le dispositif d'entraînement (63, 64), un au moins, étant en particulier disposé dans une zone entre deux bras (22, 23, 24) du support de roue (2).

9. Le support de roue (2) selon l'une quelconque des revendications précédentes, dans lequel le support de roue (2) présente au moins deux dispositifs d'entraînement (63, 64) et au moins deux éléments de transmission de la force (73, 74), les dispositifs d'entraînement (63, 64) étant en particulier disposés entre différents bras (22, 23, 24) du support de roue (2).

10. Le support de roue (2) selon l'une quelconque des revendications précédentes, dans lequel l'élément rotatif (40) peut tourner autour d'un axe (30) qui est orienté orthogonalement par rapport à un plan commun des bras (22, 23, 24), les éléments de couplage (52, 53, 54) s'étendant de manière sensiblement parallèle au plan commun des bras (22, 23, 24).

11. Le support de roue (2) selon l'une quelconque des revendications précédentes, dans lequel l'élément rotatif (40) présente une zone centrale et au moins deux bras d'élément rotatif (42, 43, 44), chacun des éléments de couplage (52, 53, 54) étant relié à l'un des bras d'élément rotatif (42, 43, 44).

12. Le support de roue (2) selon l'une quelconque des revendications précédentes, dans lequel les éléments de couplage (52, 53, 54) sont reliés de manière pivotante à l'élément rotatif (40) et aux éléments mobiles (32, 33, 34).

13. Le support de roue (2) selon l'une quelconque des revendications précédentes, dans lequel le support de roue (2) présente trois bras (22, 23, 24), dans lequel les trois bras (22, 23, 24) sont en particulier disposés à des intervalles angulaires de 120° autour du centre (28) du support de roue (2).

14. Procédé de montage d'un support de roue (2) selon l'une quelconque des revendications 1 à 13 sur une roue (1), en particulier sur une roue (1) de véhicule automobile, le procédé comprenant
de déplacer les éléments mobiles (32, 33, 34) de manière synchronisée en direction radiale vers l'extérieur en vue d'agrandir les longueurs des bras ;
de monter le support de roue (2) sur une roue (1), en particulier une roue (1) de véhicule automobile ; et
de déplacer les éléments mobiles (32, 33, 34) en direction du centre (28) du support de roue (2) de manière synchronisée à l'aide de la force exercée par le dispositif d'entraînement (63, 64), un au moins, en vue de fixer le support de roue (2) sur la roue (1).

15. Procédé de démontage d'un support de roue (2) selon l'une quelconque des revendications 1 à 13 d'une roue (1), en particulier d'une roue (1) de véhicule automobile, le procédé comprenant de déplacer les éléments mobiles (32, 33, 34) en direction radiale vers l'extérieur de manière synchronisée, contre la force exercée par le dispositif d'entraînement (63, 64), un au moins.
